# EUROPEAN PATENT APPLICATION

(11) **EP 1 365 220 A1**
(43) Date of publication of application: **26.11.2003**
(21) Application number: 02077056.6
(22) Date of filing: 24.05.2002
(51) Int. Cl.: G01L 1/22, B60N 2/12, B60R 21/01, H01C 10/10

(54) **Strain sensor incorporating a steel substrate**

(71) Applicant: CTS Corporation, Elkhart Indiana 46514-1899 (US)
(72) Inventor: Bloom, Terry, Middlebury, Elkhart, IN 46540 (US); Holmes, Curtis L., Elkhart, IN 46514 (US)
(74) Representative: Loven, Keith James

(57) **Abstract**

A strain sensor ideally suited for use as occupant weight sensors in an automobile is disclosed. The sensor uses stainless steel as a substrate. A portion of this conductive substrate is coated with a dielectric material such as porcelain. Strain sensitive resistors are screened on the dielectric to sense the strain placed on the substrate. This provides a robust and reliable sensor.

## Description

### FIELD OF THE INVENTION

This invention relates to strain sensors. This invention relates more particularly to strain sensors that carry a significant load requiring a steel substrate material.

### BACKGROUND TO THE INVENTION

The United States government has identified air bag inflation control as an important area for development. It has mandated that thirty-five percent of automobiles sold in the United States starting in model year 2004 incorporate a system capable of detecting the weight of the occupant and deploying the air bag with varying force depending on that weight.

One approach to measuring occupant weight relies on a load bearing member in the seat structure having a strain-dependent electric resistance. The change in electrical resistance of the load bearing member serves as an indication of occupant weight.

Strain-dependent resistance may be provided by thick film resistive systems in conjunction with strain sensitive paints. Such paints, sometimes also referred to as "inks" or "resistive inks", may be formulated so that dopants are present in boundaries where ruthenium crystals sinter during processing. At these points, as the overall structure is compressed, better contact is made between the crystals reducing the resistance of the material. Conversely, as the material is flexed, less contact is made and the resistance of the overall material is increased.

It is common in the art to attempt to maximize the amount of the strain sensitivity of the resistive ink materials. This is done to provide as high of a signal level as possible for the output from the device. Increased sensitivity is especially important for designs with ceramic substrates which are brittle and can be damaged with excessive bending. Thus, the amount of flexing or compression may be limited, resulting in a corresponding reduction in the output range available in the sensor

Generally, the paint materials are applied on an electrically insulative substrate in order to be used. If the paint were applied to a conductive material, the substrate would effectively provide a short circuit across the resistive material, rendering the sensor useless. Ceramic substrates have been used effectively to provide stress measurement, for example in use as pointing devices for laptop computers as described in United States Patent No. 5,966,117 or as shear beam load cells as described in United States Patent No. 6,225,526. However, ceramic materials are not adequate in some applications such as seat weight sensors where excessive stress or bending can occur. In these situations the ceramic substrate will break and the output signal will no longer be representative of the strain being measured. Thus, it would be advantageous to utilize a stronger material such as stainless steel in a load-bearing strain sensor.

It is known to provide a layer of porcelain as an insulative layer for screened resistive materials on steel. The steel provides a much improved mechanical substrate for the resistive paint materials. For example, United States Patent No. 5,959,214 teaches providing a coating layer over the dielectric material before adding the strain sensitive materials. The use of strain sensitive materials in conjunction with porcelain on steel has not been successful in part because the ruthenium matrix is apparently not compatible with the glass matrix of the porcelain. This results in an erratic output signal that is not useable when using the typical paint materials with a high strain sensitivity.

Therefore, it is an object of the present invention to provide a strain sensor using a steel substrate with a porcelain layer on the surface. It is a further objective of the present invention to provide a robust strain sensor that can be used in a high-strain environment. It is a further objective of the present invention to provide a reliable strain sensor with a long working life.

### BRIEF DESCRIPTION OF THE DRAWINGS

In the Figures:

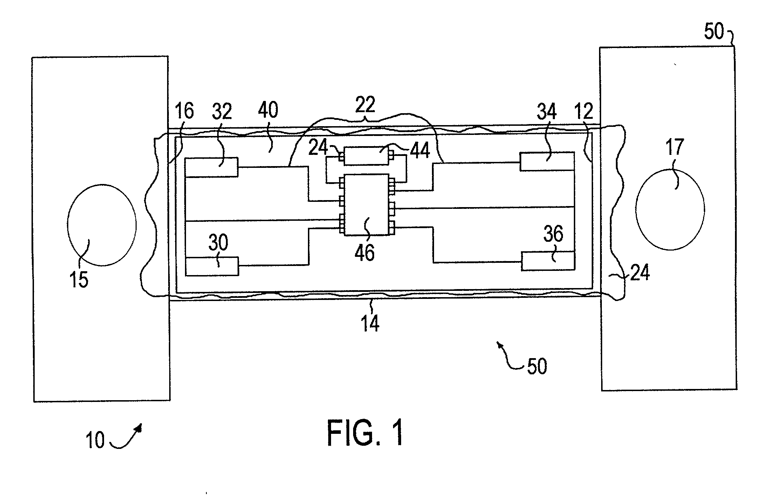

Figure 1 is a top view of the preferred embodiment of the invention;
Figure 2 is a side view of the preferred embodiment of the invention;
Figure 2A is a side view of the preferred embodiment after a first manufacturing operation;
Figure 2B is a side view of the preferred embodiment after a second manufacturing operation;
Figure 2C is a side view of the preferred embodiment after a third manufacturing process;
Figure 2D is a side view of the preferred embodiment after a fourth manufacturing operation;
Figure 2E is a side view of the preferred embodiment after a fifth manufacturing operation;
Figure 3 is a perspective view of the preferred embodiment installed in a automobile seat; and
Figure 4 is a partial cross-sectional side view of Figure 3 looking at the sensor from the inside of the seat along 2-2.

It is noted that the drawings of the invention are not to scale.

### DETAILED DESCRIPTION OF THE ILLUSTRATED EMBODIMENT

The present invention comprises an "I" shaped strain sensor 10. The strain sensor 10 is preferably stamped from stainless steel, although other conductive materials and other common methods of forming the sensor are envisioned. The strain sensor includes a neck down region 14 where the width of the sensor is narrowed. This narrowing focuses the strain placed on the sensor to the neckdown region 14. In particular, the strain is best sensed close to one of the edges 12,16 of the neckdown region 14.

The strain sensor 10 includes fastening points 15,17 at opposite ends. A first end is connected via the fastening point 15 to the load (not shown); the second end is connected via fastening point 17 to the base or supporting structure (not shown). In this way, the strain sensor 10 becomes a load-bearing member. This enables the sensor to provide an accurate indication of the actual load being carried.

A portion of strain sensor 10 is prepared with a dielectric material 40. The dielectric material 40 consists of a layer of porcelain material as is described in detail below. The porcelain is provided as an insulating layer between electrical and electronic components and the conductive steel of the strain sensor 10. The porcelain material selected is a commercially available material such Heraeus part number GPA2000-025.

Electrically conductive traces 22, mounting pads 24 and strain sensitive resistors 30,32,34,36 are screened onto the dielectric material 40. After screening the conductive traces 22 and mounting pads 24, electrical components 44,46 are attached using conductive adhesive or solder paste. This allows the sensor to incorporate both passive and active electronic devices to further utilize the strain sensor 10 as a printed circuit board.

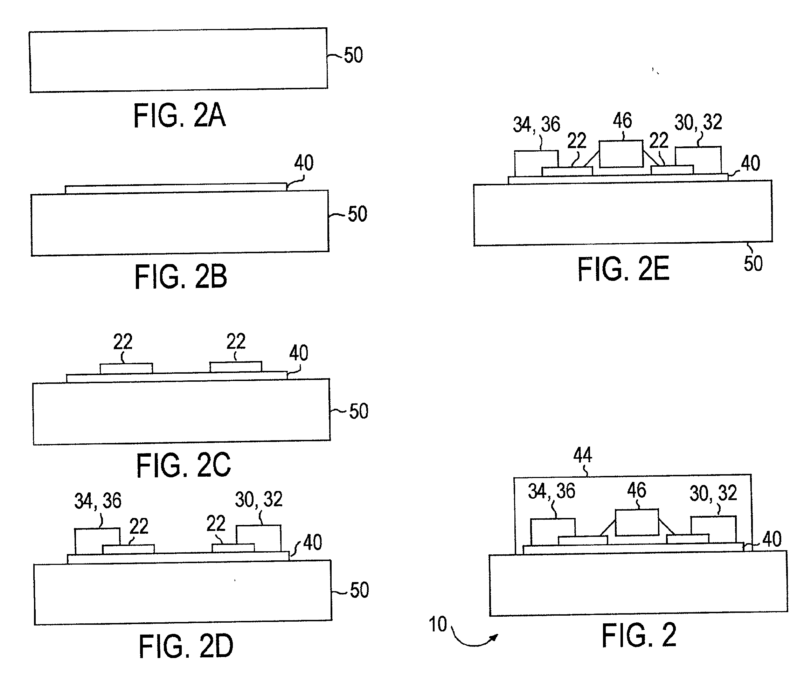

Turning now to the assembly process, strain sensor 10 is manufactured by first stamping from a steel blank a biscuit 50 as shown in profile in Figure 2A. Biscuit 50 is cleansed in a chemical bath to eliminate foreign material that could impede adherence of the porcelain layer.

The dielectric material 40 is screened onto the biscuit 50. The area selected for screening is generally the area where strain will be focused since this is ideally where the strain sensitive material will be located. The present strain sensor 10 includes a narrowed or neckdown region 14. The strain placed on the strain sensor 10 will be focused along the edge 12 between the wider end and the narrower neckdown region. The dielectric material 40 is therefore screened in this neckdown region.

After the dielectric material 40 is screened onto the biscuit 50, the biscuit 50 is fired at 850°C for approximately 45 minutes. While the firing step is described herein as placing the biscuit 50 at 850°C for 45 minutes, the biscuit 50 is actually placed in a tunnel kiln that is operating at 850°C. The preferred profile of the firing step is thus an approximate ramp up in temperature as the biscuit 50 enters the kiln, followed by approximately 10 minutes at 850°C and then a ramp down in temperature as the biscuit 50 exits the kiln. This firing profile will apply herein throughout when reference is made to firing. The biscuit 50 is then allowed to cool.

In order to ensure a complete covering of the steel by the porcelain material and to ensure proper insulative properties, two additional coatings of the dielectric material are added. These coatings are added in the same manner as the original coating. Together, the three coatings of porcelain material form a single dielectric layer on the biscuit 50, insulating the electrical components added later. A biscuit 50 with the dielectric material 40 added is shown in Figure 2B. Other methods can be used to add the dielectric layer, including a flame spray wherein the porcelain powder material is introduced into the stream and blown onto the steel substrate, a tape material is conceived that would be placed on the steel and then fired or electro-ferritic deposition could be used in which the steel substrate would be dipped into a slurry tank and then a charge would be placed on the steel and the dielectric particles causing the dielectric to coat the steel.

A conductor pattern of electrically conductive traces 22 is next screened onto the dielectric 40 as shown in Figure 2C. This pattern includes all traces necessary to connect the strain sensitive resistors to be added later as well as any passive or active electrical components. The biscuit is then fired again at 850°C for approximately 45 minutes.

The thick film strain sensitive material is then screened onto the biscuit 50 as shown in Figure 2D. The strain sensitive resistors 30,32,34,36 are placed in pairs, with one pair along each edge 12, 16. The strain sensitive resistors are interconnected to form a Wheatstone bridge circuit to allow for relative measurement of the strain applied to the sensor. The biscuit is then fired at 850°C for approximately 45 minutes.

The resistance of each of the strain sensitive resistors 30,32,34,36 is then measured. In order to function properly, the bridge circuit should be balanced, with the various resistors being approximately equal in value. However, in the screening process it is common for the resistive material to vary in thickness and/or width along the prescribed area. This results in each of the resistors having a variance that is not acceptable to the bridge circuit. In order to balance the resistor values in the bridge, the resistors are trimmed. This process uses a laser to cut through portions of the resistive ink, causing the electrical current to flow through a restricted area. This effectively increases the resistance of the component being trimmed. By properly trimming the various resistors in this manner, the overall bridge circuit can be balanced.

If desired, passive and active electrical components 46 can now be added to the strain sensor 10 as shown in Figure 2E. This is frequently desirable because the output from the strain sensor 10 is a relatively low-level electrical signal and is therefore susceptible to electromagnetic interference from surrounding sources. By amplifying or conditioning the electrical output from the strain sensor 10, the signal can be used with greater reliability. If the signal from the strain sensor 10 is used by a device in close physical proximity to the sensor 10, this amplification may not be required and the passive and electrical components are not added.

After the electrical circuit is completed, a protective coating 44 may be applied to further insulate the strain sensor 10 from electromagnetic interference or from physical or chemical abrasion. For example, since the strain sensor 10 is intended to be placed in an automobile, a consumer may inadvertently spray cleaning agents on the strain sensor 10. The consumer may also abrade the strain sensor 10 with articles that are placed or forced under the seat into physical contact with the strain sensor 10.

Many strain sensitive inks may be used for the strain sensor 10. It is common to use strain sensitive materials on ceramic substrates that have a high degree of strain sensitivity. This is done to provide a higher level output signal. However, it has been found i through experimentation that these materials are not compatible with the glass matrix of the porcelain materials. Thus, the signals from these strain sensitive inks are erratic and unpredictable. These strain sensitive inks can not, for this reason, be used in applications using porcelain screened on steel as the dielectric material.

It has been found that by selecting a resistive ink material that is compatible with the porcelain material a functional strain sensitive material can be derived. Many suppliers provide ink materials that are compatible with a porcelain dielectric for use on steel. For example, Heraeus provides a porcelain material number GPA2000-025 for use on stainless steel. A compatible resistive ink is Heraeus material number R8941DS. By starting with the model R8941DS ink, one can add materials to the ink to make it strain sensitive. Dopants can then be added to this material to arrive at a strain sensitive material with an acceptable temperature coefficient of resistance (TCR). In this way, a new ink can be formed that will be compatible with the porcelain materials on stainless steel. An ink material arrived at using this method is Heraeus material number R8941DN. Other manufacturers offer similar dielectric materials and compatible resistive inks. These materials can be modified to arrive at a strain sensitive ink that can be used on the dielectric material on steel. Strain sensitive inks that will properly function on the dielectric material screened to steel will ideally have a TCR of approximately 50 ppm.

Prior strain sensitive inks typically had a TCR of approximately 300 ppm. Similarly, the gage factor of typical inks used on ceramic materials are in the range of 12-13; the inks used on the dielectric screened to steel are typically in the range of 8-9. These characteristics are the result of using the ink materials that are originally formulated to work optimally as a resistive material and then adding the strain sensitivity to that material as opposed to formulating an ink that is optimized for use as a strain sensitive material. The present process will work best when the TCR is below 100 ppm and the gage factor will typically be below 10. An additional feature to be considered in selecting the ink to be used is the noise characteristic. Typical strain-sensitive resistive materials have a much lower signal to noise ratio than is ideal. The inks derived through the disclosed process have a much higher signal to noise ratio.

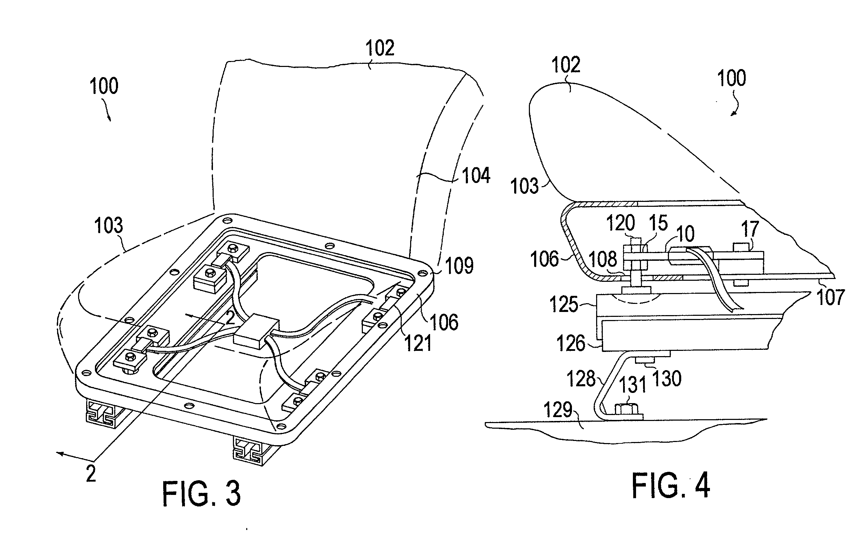

The present invention provides a vehicle weight sensor for detecting the weight of a seat occupant. Referring to Figure 3 and Figure 4, there is a seat assembly 100 shown. Seat assembly 100 has a seat 102 with a seat back 104, and a seat bottom 103. A seat pan 106 is located between an upper slide rail 125 and seat bottom 102. Seat pan 106 has seat pan bottom 107 that has a seat pan clearance aperture 108 formed therein. A seat pan outer rim 109 runs around the outside perimeter of seat pan 106. A seat lip 121 extends inwardly from outer rim 109. Seat pan fasteners 120 are used to attach seat bottom 103 to seat pan 106. A lower slide rail 126 is slidably attached to upper slide rail 125 by roller bearings (not shown). The slide rails 125 and 126 allow seat assembly 100 to slide forward and backwards in a vehicle. The lower slide rail 126 is attached to seat bracket 128 by a fastener 130 such as a bolt or rivet. The seat bracket 128 is attached to a vehicle floor 129 by a fastener 131 such as a bolt or rivet.

Strain sensor 10 can be placed anywhere along the load-bearing path. For example, strain sensor 10 may be attached via fastening point 15 to the upper slide rail 125 via a bolt, rivet or other fastening mechanism. Fastening point 17 can then be attached to seat pan 106, also via a bolt, rivet or other fastening mechanism. In this way, the weight of the seat occupant is passed from the seat bottom to the seat pan 106, through the strain sensor 10 to the upper slide rail 125. The strain sensor 10 will, in this way, be able to provide an output indicative of the weight of the occupant.

While the invention has been taught with specific reference to these embodiments, someone skilled in the art will recognize that changes can be made in form and detail without departing from the spirit and the scope of the invention. For example, while the invention has been taught with reference to an occupancy seat weight sensor, it will be recognized that a load sensor of this type can be used in a wide variety of applications. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A strain measuring sensor, comprising a load carrying member, a single layer of dielectric material formed on a side of the load carrying member, and strain sensitive resistive material formed on the dielectric material.

2. A strain measuring sensor according to Claim 1, comprising conductive traces formed on the dielectric, the conductive traces providing an electrical connection to the strain sensitive resistive material.

3. A strain measuring sensor according to Claim 2, comprising a connection pad formed on the sensor, and wherein the conductive traces electrically connect the connection pad with a strain sensitive material.

4. A strain measuring sensor according to any preceding claim, wherein the dielectric material comprises porcelain.

5. A strain measuring sensor according to Claim 4, wherein the dielectric layer comprises a plurality of coatings of porcelain.

6. A strain measuring sensor according to any preceding claim, wherein the load carrying member is conductive.

7. A strain measuring sensor according to Claim 6, wherein the load carrying member is made of stainless steel.

8. A method for making a strain sensitive sensor, comprising the steps of:
providing a solid substrate;
forming a single dielectric layer on the substrate;
forming conductive traces on the dielectric layer; and
forming at least one strain sensitive resistor on the dielectric layer.

9. A method according to Claim 8, comprising placing the conductive traces so they electrically interconnect the strain sensitive resistor to a connection pad.

10. A method according to Claim 8, comprising forming at least four strain sensitive resistors on the dielectric material, and interconnecting the conductive traces and the strain sensitive resistors to electrically form a bridge circuit.

11. A method according to Claim 8, 9 or 10 comprising coating the dielectric material with an insulative material.

12. A method according to Claim 8 to 11, wherein the solid substrate is formed from a conductive material.

13. A method according to Claim 12, wherein the solid substrate is formed from stainless steel.

14. A strain sensitive sensor comprising:
a substrate formed of metal;
a dielectric material screened and fired onto the metal;
four strain sensitive resistors formed by screening strain sensitive inks onto the dielectric material; and
conductive traces formed on the dielectric to electrically connect the strain sensitive resistors to form a bridge circuit.

15. A strain sensitive sensor according to Claim 14, wherein the metal is stainless steel.

16. A strain sensitive sensor according to any of Claims 14 or 15, wherein the strain sensitive inks have a temperature coefficient of resistance of not more than 100 ppm.

17. A strain sensitive sensor according to any of Claim 14 to 16, and wherein the strain sensitive inks have a gage factor less than or equal to 10.

18. A strain sensitive sensor according to any of Claims 14 to 17, wherein the dielectric material is porcelain.

19. A strain sensitive sensor according to Claim 18, wherein the porcelain layer comprises three individual coats of the porcelain material.

20. A vehicle seat weight sensor for sensing weight of an occupant in a vehicle seat, the seat having a seat back, a seat bottom and a seat bracket connected to a vehicle floor, a lower slide rail, and an upper slide rail coupled to the seat bracket and a seat pan attached to the upper rail, the vehicle seat weight sensor comprising:
a load bearing member;
a single layer of dielectric material formed on the load bearing member;
a plurality of strain sensitive resistors formed on the dielectric layer;
a first attachment point at a first end of the load bearing member;
a second attachment point at a second end of the load bearing member;
the load bearing member being disposed between the vehicle seat and the vehicle floor such that a portion of the weight of the occupant on the seat bottom is transferred from the seat bottom to the vehicle floor through the load bearing member.
